# EUROPEAN PATENT SPECIFICATION

(11) **EP 2 799 830 B1**
(45) Date of publication and mention of the grant of the patent: **20.11.2019**
(21) Application number: 12861411.2
(22) Date of filing: 26.12.2012
(51) Int. Cl.: G01L 19/04, G01L 9/00, G01M 99/00, B22D 11/16, B05B 12/00, G01L 19/00, B22D 11/22, G01L 1/02, B05B 12/08

(54) **COOLING SYSTEM PERFORMANCE EVALUATION APPARATUS COMPRISING A SENSOR DEVICE**
VORRICHTUNG ZUR BEURTEILUNG DER LEISTUNG EINES KÜHLSYSTEMS MITTELS EINER SENSORVORRICHTUNG
APPAREIL D'ÉVALUATION DE LA PERFORMANCE D'UN SYSTÈME DE REFROIDISSEMENT COMPRENANT UN CAPTEUR

(30) Priority: 28.12.2011 KR 20110144742; 24.10.2012 KR 20120118283; 20.12.2012 KR 20120149658
(43) Date of publication of application: 05.11.2014
(73) Proprietor: Posco, Gyeongsangbuk-do 790-300 (KR)
(72) Inventor: KANG, Jong-Hoon, Pohang-si Kyungsangbook-do 790-360 (KR); LEE, Pil-Jong, Pohang-si Kyungsangbook-do 790-360 (KR); CHOI, Hee-Chae, Gwangyang-si Jeollanam-do 545-711 (KR); KO, Seong-Hyun, Pohang-si Kyungsangbook-do 790-360 (KR)
(74) Representative: Zech, Stefan Markus
(86) International application number: PCT/KR2012/011442
(87) International publication number: WO 2013/100546

(56) References cited:
- EP-A1- 1 334 343
- EP-A2- 1 247 896
- WO-A1-99/28043
- DE-A1- 4 112 309
- DE-A1-102004 048 367
- DE-A1-102004 051 219
- JP-A- H06 315 660
- JP-A- 2008 196 858
- JP-A- 2010 172 921
- JP-B2- H0 771 688
- JP-U- S54 117 283
- KR-B1- 930 007 637
- US-A- 5 212 989
- US-A- 5 438 876
- US-A- 5 461 922
- US-A1- 2005 241 367
- US-A1- 2007 204 704
- US-A1- 2008 083 283
- US-A1- 2011 165 488

## Description

### [Technical Field]

The present disclosure relates to a sensor device and an apparatus for evaluating the performance of a cooling system, including the same, and more particularly, to a sensor device allowing for the generation of a quantitative signal as well as a qualitative signal corresponding to the pressure of gas or liquid impacting a membrane member, for example, the pressure of a column of liquid or injection water, dispensed or injected from a nozzle, on a membrane member, allowing for the establishment of data, and preventing the occurrence of errors in measurement due to changes in temperature, to precisely evaluate cooling system performance (in a pouring or injection state) at least quantitatively, to thereby improve maintainability and operability of the cooling system, and an apparatus for evaluating the performance of a cooling system, including the same.

### [Background Art]

Slabs manufactured through a continuous casting process and a process using a heating furnace are produced as thick plates having a predetermined thickness through rough milling (RM) and finishing milling (FM).

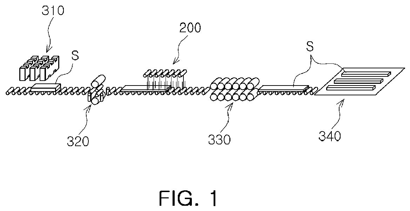

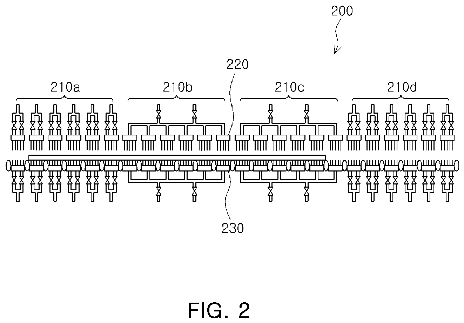

For example, as illustrated in FIGS. 1 and 2, a slab manufactured through a continuous casting process is heated to a target temperature depending on a grade of steel, using a heating furnace 310, and the slab, having passed through the heating furnace, is rolled to have a predetermined thickness, for example, a thickness desired in a final product while undergoing a rolling process (320) including rough milling and finishing milling, thereby producing a thick plate.

Meanwhile, the thick plate S rolled to have a predetermined thickness through the rolling process is passed through an accelerated cooling unit 200 so as to control grain refinement or a transformation structure.

Further, in order to improve a rolled product (thick plate product) quality, the thick plate S is hot-leveled using a straightening machine 330 and is completed as a product at the stage of using a cooling die 340.

On the other hand, it is necessary to set optimization conditions from the heating furnace 310 to the accelerated cooling unit 200 in order to produce products without the occurrence of defects therein, for example, non-transformation products, and it is necessary to remove factors causing the need for equipment management and non-uniformity in temperature in the rolled material (a thick plate) S. The factors causing the non-uniformity in temperature are relevant to the controlling of the temperature of a material in the accelerated cooling unit 200 illustrated in FIGS. 1 and 2.

Here, although the drawing schematically illustrates the accelerated cooling unit 200 as illustrated in FIG. 2, the accelerated cooling unit 200 may be configured of four to seven banks, for example, 210a to 210d, and respective banks include four to six cooling headers, for example, upper and lower headers 220 and 230.

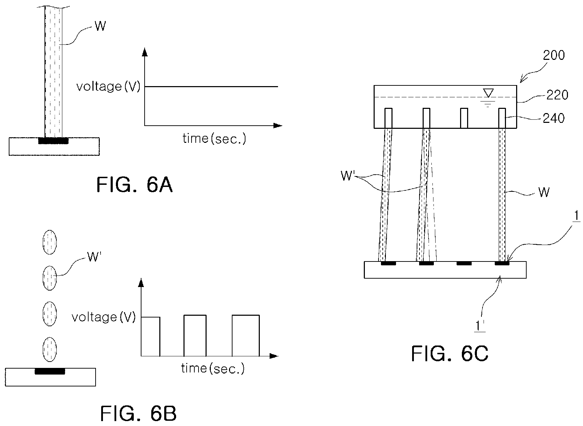

Meanwhile, a respective unit header, for example, the upper header 220 includes about 1000 nozzles (240 of FIG. 6C) forming columns of liquid and aligned in rows having uniform intervals therebetween.

However, the nozzles 240 provided in the headers of the accelerated cooling unit 200 are easy to be blocked in inner portions of nozzles and outer portions thereof (jet holes) due to a difference in the ionization of constituent components thereof, heating and cooling.

For example, such a blocking phenomenon in the nozzles of a header mostly occurs as holes are plugged with scales generated due to degradation.

Therefore, in a case in which only portions of a considerable amount of nozzles in one unit header are blocked or nozzles are narrowed due to other foreign matter, corrosion, or the like, the cooling of the thick plate S to a finish cooling temperature (FCT) may be difficult to be performed or a cooling defect may be caused.

Furthermore, when the nozzles are blocked or narrowed, internal pressure of the accelerated cooling unit increases and relevant components connected thereto, such as a pipe, a measuring instrument, a pump, and the like, are apt to break down.

Thus, research into the structural improvement, for example, a diameter and material of a nozzle in a header of an accelerated cooling unit, an interval between nozzles, the design of a pipe, and the like, has been carried out, but results thereof were somewhat ineffective.

In particular, there have been difficulties in grasping a state in which liquid is dispensed from an accelerated cooling unit, for example, whether columns of liquid are normally provided from nozzles, based on automation.

For example, according to the related art, an evaluation of whether nozzles were operating normally was undertaken by capturing an image of a column of liquid through nozzles using a camera and analyzing a captured image, or manually measuring a length of a column of liquid dispensed through nozzles.

As a result, in the case of the related art, it takes a considerable amount of time to understand a pouring state of liquid through nozzles, and furthermore, since work is confined to a workplace in which accelerated cooling units are actually established and is performed manually, it may be difficult to precisely determine a state in which liquid is dispensed through nozzles.

Therefore, a method capable of allowing a user to easily grasp the performance of cooling equipment, for example, a pouring state of liquid dispensed through nozzles of a header of an accelerated cooling unit in a rapid and quantitative scheme is proposed according to the present disclosure.

Examples of sensors to detect the pouring state of liquid in the prior art can be found, for example, in DE 10 2004 051 219 A1, DE 10 2004 048 367 A1, DE 41 12 309 A1, US 5 461 922 A, US 5 212 989 A, US 2011/0165488 A1, US 2007/0204704 A1, EP 1 334 343 A1, or US 2008/0083283 A1. The sensors disclosed in these documents comprise a housing on which a membrane is disposed and limits a pressure transmission chamber that is filled with a liquid through which pressure applied to the membrane is transmitted to a pressure sensitive member to measure the pressure. Further devices for checking the operation of nozzles are described in JP H06 315660 A, EP 1 247 896 A2, US 2005/0241367 A1, and WO 99/28043 A1.

However, a sensor device according to the present disclosure, to be described below, capable of evaluating a pouring state of liquid, is not limited to cooling equipment. Since the sensor device has a structure in which a qualitative signal or a quantitative signal is generated when pressure is applied thereto due to collisions of harmful liquid, gas, or the like therewith, it may also be used to verify the leakage of gas, liquid or the like. On the other hand, a description of the present disclosure, relevant to nozzles of a header of an accelerated cooling unit, will be provided below.

### [Disclosure]

### [Technical Problem]

It is necessary to provide a sensor device allowing for the establishment of a sensor to generate a quantitative signal as well as a qualitative signal corresponding to pressure applied to a membrane member of the sensor at the time of collision (contact) of pressure-applying matter such as (leaking) gas or liquid, a column of liquid or injection water dispensed or injected through a nozzle, or the like.

Further, a sensor device capable of preventing the occurrence of measurement errors by controlling a temperature of gas (air) transferring pressure applied thereto, to a sensor, to allow gas density to constantly change depending on coolant or ambient atmospheric temperature and secure precision in measurement is required.

It is also necessary to provide a sensor device allowing for stabilized and quantitative evaluation by filling an operation space with incompressible fluid (liquid, water, or the like) in which no change or a relatively small change in density according to temperature occurs, so as not to be affected by temperature.

Therefore, the embodiments of the present disclosure provide an apparatus for evaluating cooling system performance, capable of preventing the occurrence of cooling errors through quantitative, rapid and precise evaluation of cooling system performance (in a pouring state of liquid), based on the sensor device according to the present disclosure, and allowing for easy maintenance and repair of equipment by determining a state of nozzles of a cooling system, based on automation in a poor environment confined to a relatively small workplace.

### [Technical Solution]

According to embodiments of the present disclosure, an apparatus for evaluating performance of a cooling system provided with a cooling header including a nozzle is proposed, the apparatus including a sensor device, the apparatus comprising: a sensor mounting unit provided on a movement path on which a target material to be cooled is moved; and a sensor device provided in the sensor mounting unit to be aligned to correspond to the nozzles, wherein the sensor device includes a housing including a gas space; a membrane member provided with the housing and inducing a change in a volume of the gas space at the time of a collision or contact of a pressure-applying material with the membrane member; and a sensor unit provided in the housing to communicate with the gas space, wherein a barrier member is provided on a lower portion of the membrane member to be disposed in an inner portion of the gas space to allow a fluid to be concentrated on the sensor unit, wherein the barrier member is integrated with the membrane member on a lower portion thereof, and wherein the barrier member seals a passage communicating with the pressure sensor to implement the compression of fluid in the inside thereof.

### [Advantageous Effects]

According to exemplary embodiments of the present disclosure, a sensor structure may allow for the generation of a quantitative signal as well as a qualitative signal corresponding to pressure applied at the time of collision (contact) of liquid, gas, a column of liquid, injection water dispensed or injected through nozzles, or the like, and allow for the establishment of data.

In addition, controlling of temperature of an operating fluid transferring pressure applied thereto, to a sensor, for example, gas or air, may be implemented, such that a change in density of gas depending on external temperature or a change in temperature by a coolant may be constant to prevent the occurrence of measurement errors and secure the precision in measurement.

In addition, incompressible fluid (liquid) without a density change depending on temperature may fill an operation space, thereby performing stabilized and quantitative evaluation without an influence due to temperature.

Therefore, since the cooling system performance (in a dispensing or injection state of liquid) may be quantitatively and precisely evaluated, based on the sensor device according to the present disclosure, the overall evaluation of cooling capability as well as a nozzle state may be carried out, based on automation, even in a poor environment confined to a relatively small workplace.

As a result, maintenance and repair of a cooling system according to an exemplary embodiment of the present disclosure may be relatively easy, an operating ratio thereof may be significantly increased, and cooling quality and product quality and productivity thereof may be improved.

### [Description of Drawings]

The above and other aspects, features and other advantages of the present disclosure will be more clearly understood from the following detailed description taken in conjunction with the accompanying drawings.

The skilled person will note that some elements of the description to follow do not fall under the scope of the claims. To the extent that such a disparity exists, such disclosure is to be understood as mere supporting information that does not form part of the invention. The invention is defined by the claims alone.
In the drawings:
FIG. 1 illustrates a publicly known thick plate manufacturing process;
FIG. 2 is a schematic view of a cooling system (an accelerated cooling unit) of FIG. 1;
FIG. 3 illustrates a state in which a sensor device according to a first exemplary embodiment of the present disclosure is used and operated;
FIG. 4 is a partially cut perspective view of the sensor device of FIG. 3;
FIG. 5 is a configuration diagram of the sensor device of FIG. 3;
FIGS. 6A to 6C are drawings and graphs illustrating an operational concept of a sensor device according to an exemplary embodiment of the present disclosure;
FIG. 7 is a graph illustrating measurement data by way of examples in a sensor device according to an exemplary embodiment of the present disclosure;
FIGS. 8 to 12B illustrate modified examples of the sensor device according to the first exemplary embodiment of the present disclosure;
FIGS. 13 and 14 are drawings illustrating a state in which a sensor block is coupled and exploded, based on sensor devices according to an exemplary embodiment of the present disclosure;
FIGS. 15A and 15B are configuration drawings illustrating an apparatus for evaluating performance of a cooling system using a sensor block according to an exemplary embodiment of the present disclosure and illustrating an LM-type sensor mounting unit;
FIGS. 16A and 16B are a state drawing and a front view of a deployable sensor mounting unit on which a sensor block according to an exemplary embodiment of the present disclosure is mounted;
FIGS. 17 to 19 are a configuration view, a front view and a plan view of a masking type sensor mounting unit on which a sensor block according to an exemplary embodiment of the present disclosure is mounted;
FIGS. 20 to 25 illustrate several types of sensor device according to a second exemplary embodiment of the present disclosure; and
FIGS. 26 to 27 illustrate several types of sensor device according to a third exemplary embodiment of the present disclosure.

### [Best Mode for Invention]

Exemplary embodiments of the present disclosure will now be described in detail with reference to the accompanying drawings.

The disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

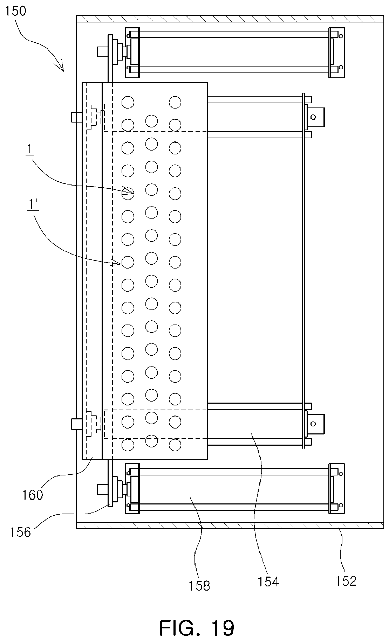

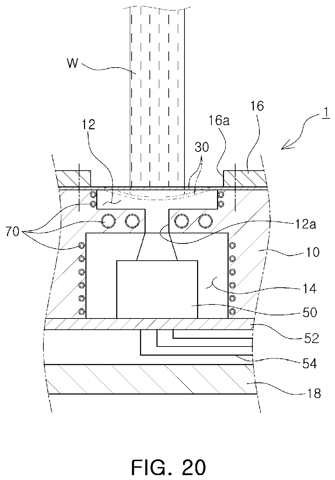

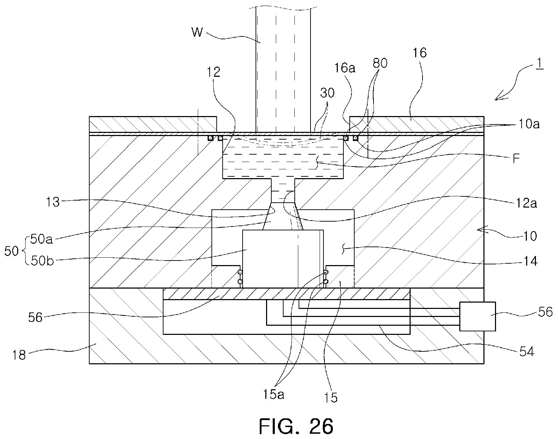

First, FIGS. 1 to 19 illustrate a sensor device according to a first exemplary embodiment of the present disclosure and several types of a sensor mounting unit, based on the sensor device of the first exemplary embodiment of the present disclosure, FIGS. 20 to 25 illustrate several types of a sensor device according to a second exemplary embodiment of the present disclosure, and FIGS. 26 to 27 illustrate several types of a sensor device according to a third exemplary embodiment of the present disclosure.

Since the basic structures of the sensor devices according to the first to third exemplary embodiments of the present disclosure are the same as each other, a sensor device 1 according to the first exemplary embodiment of the present disclosure will be described in detail, and in descriptions of sensor devices according to the second and third exemplary embodiments of the present disclosure, descriptions of constituent elements thereof identical to those of the sensor device of the first exemplary embodiment will be simplified.

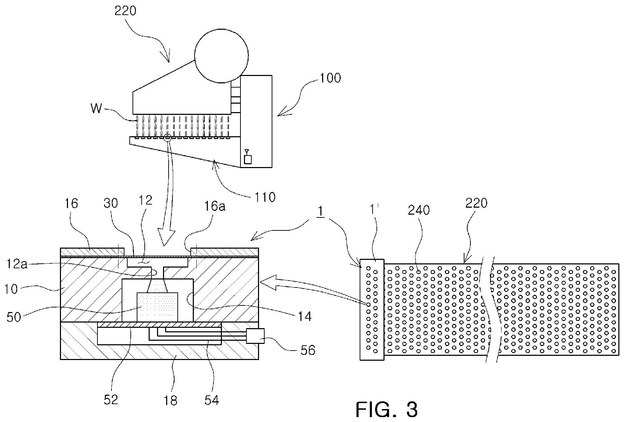

First, FIGS. 3 to 5 illustrate a sensor device 1 according to the first exemplary embodiment of the present disclosure.

As illustrated in FIGS. 3 to 5, the sensor device 1 according to the first exemplary embodiment of the present disclosure may include a housing 10 including a fluid space 12 receiving incompressible gas, compressible gas, or an operating fluid such as an incompressible fluid (liquid, water, oil, mercury, etc.), or the like, a membrane member 30 provided with the housing to seal the fluid space, to which a pressure-applying material is applied (collides), and a sensor unit 50 provided in the housing to communicate with the fluid space 12 and measuring pressure generated when the pressure-applying material collides with the membrane member.

Here, in the case of the sensor device of the first exemplary embodiment and the sensor devices of the second and third exemplary embodiments, the pressure-applying material may be provided as gas, liquid, a column of liquid W, injection water dispensed or injected through nozzles 240 provided with a cooling header of an accelerated cooling unit 200, for example, an upper header 220, or the like.

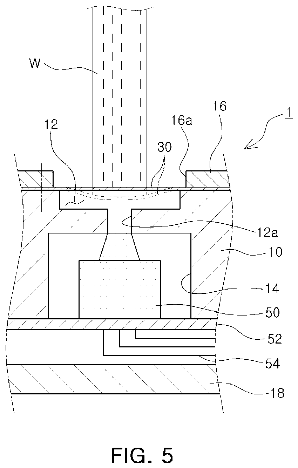

However, in the exemplary embodiment of the present disclosure to1 be described below, the pressure-applying material will be described with regard to the column of liquid W (water column) or injection water dispensed or injected through the nozzles 240 of the upper header 220 of the accelerated cooling unit 200 as illustrated in FIGS. 3 and 5.

In addition, the sensor unit will be described below with a pressure sensor 50.

The operating fluid filled in the fluid space 12 provided in the housing 10 may be used as long as it allows for the measurement of pressure (an amount of change therein) through the medium of the pressure sensor 50 responding to a volume change. For example, incompressible gas applicable to the sensor devices of the first and second exemplary embodiments, such as gas or air, further in detail, air, may be used, or incompressible fluid applicable to the sensor device of the third exemplary embodiment described below, such as water, oil, mercury, or the like, may be used. A specific compressible gas for a specific purpose may also be filled in the fluid space 12.

Therefore, in the case of the sensor device 1 according to the present disclosure, when the column of liquid W is normally dispensed from the upper header 220 as illustrated in FIGS. 3 and 5, the column of liquid W collides with the membrane member 30 of the sensor device, and in this case, since the membrane member 30 is formed of a relatively thin film, the membrane member 30 may be distorted to be concave in a direction opposite to that of the collision.

The collision force of the column of liquid indicates whether the column of liquid is normally dispensed through the nozzles 240 or whether the nozzles 240 are blocked partially or in the entirety thereof so as not to allow the column of liquid to be dispensed in a normal amount. Alternatively, measurement values measured by the pressure sensor 50 may differ from one another depending on an extent of collision force which the column of liquid itself collides with the membrane member 30.

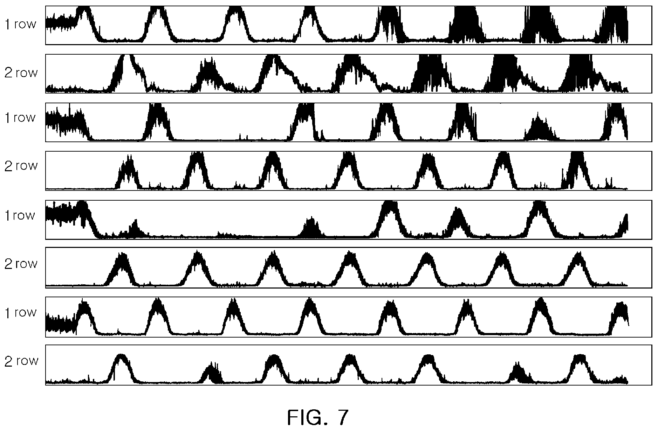

In such a case, since the pressure sensor 50 may rapidly react thereto, an amount of change in pressure measured by the pressure sensor 50 may be precise as illustrated in FIG. 7.

For example, as illustrated in FIG. 5, when the column of liquid W dispensed from the upper header falls to and collides with the membrane member 30, fluid in the fluid space 12, for example, a flow amount of air or water therein may be increased, and the pressure sensor may measure a pressure value (generate a voltage signal).

In this case, when a reference pressure value indicating that pressure is not being applied to the membrane member 30 is preset and a controlling unit may compare differential pressure with the measured pressure value, quantitatively measured data as in FIG. 7 may also be established.

On the other hand, the membrane member 30 of the sensor device 1 according to an exemplary embodiment of the present disclosure is formed using a material appropriate therefor, for example, urethane, silicon, stainless steel, or the like, and may have a thickness appropriate therefor, for example, in a range of from 0.5 to 1.5mm.

For example, when the membrane member 30 has a reduced thickness of less than 0.5mm, although reaction sensitivity of a sensor may be excellent, durability thereof may be decreased, and when the membrane member 30 has a thickness greater than 1.5mm, although the durability thereof may be secured, a deflection amount of the membrane member 30 at the time of the generation of collision by the pressure-applying material may be relatively small to reduce a reaction speed or the sensitivity thereof.

In addition, when the thickness of the membrane member is less than 0.5mm, a lifespan of the membrane member or a level of elasticity thereof to return to an original position after the collision of the column of liquid may be decreased, such that the overall lifespan may be reduced.

Meanwhile, in consideration of securing of durability in terms of repetitive collision of the column of liquid and the return of the membrane member to an initial position after the collision of the column of liquid, the membrane member 30 may be formed using a stainless material.

Then, as illustrated in FIGS. 3 to 5, the sensor device 1 according to the exemplary embodiment of the present disclosure may have a sensor space 14 in which the pressure sensor 50 is located.

In addition, an upper portion of the housing 10 may be provided with an upper plate 16 compressing the membrane member 30 from above, and the upper plate 16 may have an opening part 16a therein providing a space in which the column of liquid W may collide with the membrane member 30.

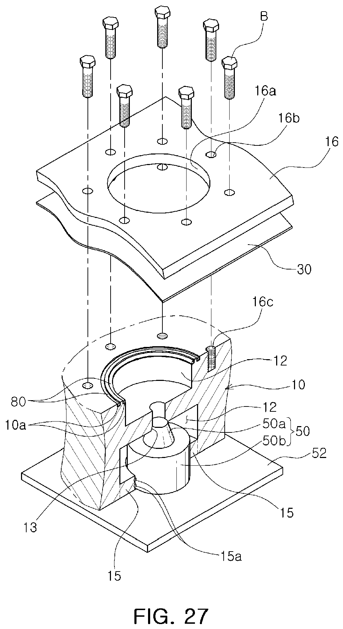

For example, as illustrated in FIG. 27, bolt-fastening holes 16b may be formed in the vicinity of the opening part 16a of the upper plate 16, and bolt-fastening holes 16c may also be formed in the housing 10 such that the upper plate may be attached to the housing in a state in which it compresses the membrane member 30 while encompassing the membrane member 30.

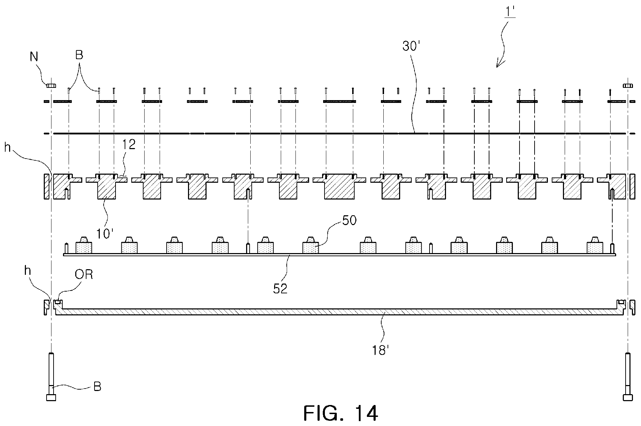

Since a portion of the membrane member corresponding to the vicinity of the upper plate is compressed thereby and the membrane member has a structure in which it is actually provided as a single member (see 30' of FIG. 14) and a portion thereof is exposed to the opening part of the upper plate, uniform operational performance may be provided.

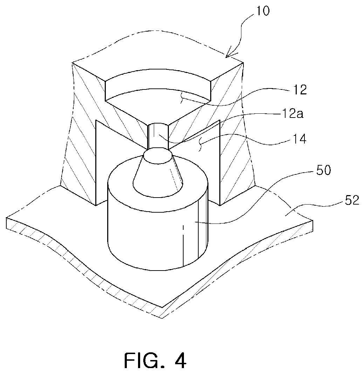

As illustrated in FIGS. 4 and 5, the pressure-applying material, for example, the column of liquid W dispensed through the nozzles of the upper header collides with the membrane member 30, the membrane member 30 may be momentarily deflected downwardly, and at this time, fluid, for example, air, water, or the like is compressed according to a change in the volume of the fluid space 12 and the pressure sensor 50 positioned in a lower portion thereof may measure pressure.

In addition, a substrate 52 on which the pressure sensor 50 is mounted may be mounted on a lower portion of the housing, and a connection cable 54 may be connected to an external device, for example, a controlling unit C, through a socket 56.

In detail, as illustrated in FIGS. 4 and 5, a circuit board 52 on which pressure sensors 50 are mounted may be provided between a lower plate 18 and a pressure sensor seating part 14 of the housing 10, and the circuit board may be connected to a connector 56 allowing for external electrical connection. Alternatively, the cables 54 may be connected to the connector 56.

As a result, the sensor device 1 according to an exemplary embodiment of the present disclosure may continuously measure a micro-pressure difference by the collision of the column of liquid with the membrane member.

In further detail, a passage 12a having a reduced volume (cross-sectional area) as compared to that of the fluid space 12 may be located between the fluid space 12 and the pressure sensor 50 provided in the housing of the sensor device 1 as illustrated in FIGS. 4 and 5.

Thus, since the volume of the passage 12a is reduced as compared to that of the fluid space 12, when the pressure-applying material, for example, the column of liquid W collides with the membrane member 12, the fluid filling the space, for example, air may move and flow due to a change in the volume of the space, and the air may be concentrated while passing through the reduced passage 12a such that the reaction sensitivity of the pressure sensor 50 may be further excellent.

In addition, instead of application of the passage thereto, a tube or the like being in contact with the pressure sensor may be installed.

FIGS. 6A to 6C illustrate a basic operation of the sensor device 1 according to an exemplary embodiment of the present disclosure, and FIG. 7 is a graph illustrating quantitative measurement data through the sensor device 1 according to an exemplary embodiment of the present disclosure.

For example, as illustrated in FIG. 6A, when the column of liquid W is normally dispensed from the upper header 220, the column of liquid W normally, continuously collides with the membrane member 30 of the sensor device 1 according to the exemplary embodiment of the present disclosure. This may indicate that an output voltage per hour, for example, an electrical signal generated by the pressure sensor 50 may be represented as a linear output signal as in the graph of FIG. 6A.

However, as illustrated in FIG. 6B, when portions of the nozzles 240 of the header are blocked so as not to allow for the normal dispensing of liquid and columns of discontinuous liquid W' are dispensed, a voltage signal transferred by the pressure sensor 50 may be short-circuited.

Thus, in the case of the sensor device 1 according to the exemplary embodiment of the present disclosure, signals based on a change in the volume of the fluid space 12 by the collision of the column of normal liquid W or the column of defective liquid W' with the membrane member 30 may be continuously measured, to evaluate performance of the cooling system, for example, a performance state of the nozzles.

For example, as illustrated in FIGS. 6A to 6C, the sensor device 1, according to the exemplary embodiment of the present disclosure, may evaluate the column of normal liquid W, the column of abnormal liquid W', or the like, dispensed through the nozzles 240 of the cooling header 220. Even when the column of liquid is dispensed normally, since in a case in which a dispensing direction of liquid is abnormal (FIG. 6C), the sensor device 1 does not react therewith, the column of liquid may collide with the membrane member 30 only when a column of normal liquid is dispensed as illustrated in FIGS. 5 and 6C.

Therefore, the sensor device 1 according to the present disclosure may evaluate whether the nozzles are completely blocked, depending on whether the column of liquid W normally collides with the membrane member 30 of the sensor device 1, and even when the column of liquid is dispensed, the case in which the amount of flow thereof is not normal or the column of discontinuous liquid is formed may also be evaluated.

On the other hand, FIG. 7 illustrates a graph illustrating a quantitative evaluation state of a cooling system through the sensor device 1 according to the exemplary embodiment of the present disclosure.

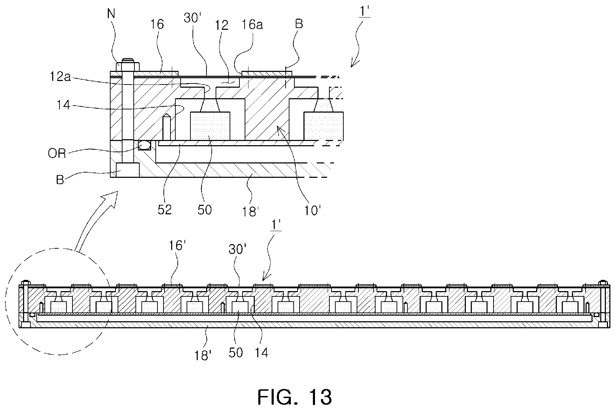

For example, when a sensor block 1' including the sensor devices 1, illustrated with reference to FIGS. 13 and 14, passes through a lower portion of the upper header 220, the column of actually dispensed liquid W may be moved from an edge of the membrane member 30 to a central portion thereof to represent a peak value of a signal, and may re-move toward an edge thereof, such that the signal (voltage) may be continuously represented in an umbellate form as illustrated in FIG. 7.

In this case, regions of second Column 1 and third Column I of FIG. 7 from which there is no signal, in other words, a signal value is not generated, indicate that the nozzles are abnormal.

Therefore, the performance of the nozzles of the header may be evaluated using the sensor device 1 according to an exemplary embodiment of the present disclosure. As a result, for example, the performance of the accelerated cooling unit may be evaluated.

In detail, the sensor device 1 according to an exemplary embodiment of the present disclosure and the sensor block 1' including a plurality of the sensor devices of the present disclosure are provided such that controlled cooling in the cooling system may be set to be suitable for a material or cooling conditions of a thick plate.

For example, in the case of FIG. 7, measurement values obtained by movement of the sensor block 1' in which the sensor devices 1 are aligned in two columns, through the lower portion of the cooling header 220, are represented by the graphs. The alignment of the sensor devices in the sensor block may be appropriately adjusted.

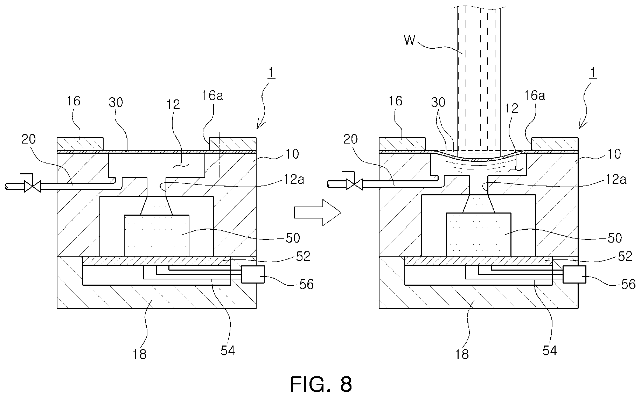

FIGS. 8 to 12 illustrate modified examples of the sensor device 1 described above according to the first exemplary embodiment of the present disclosure.

However, in the modified examples of the exemplary embodiment of the present disclosure with reference to FIGS. 8 to 12, the fluid space 12 will be described as a gas space 12 filled with air or gas, below.

For example, as illustrated in FIG. 8, an operation pipe 20 configured to communicate with the gas space 12 provided in the housing 10 of the sensor device 1 according to the present disclosure and control a vacuum atmosphere or air atmosphere of the gas space may be further provided.

Here, although the operation pipe 20 is not separately illustrated in a separate drawing, the operation pipe 20 may actually have a structure in which an external pipe is connected through a passage (hole) formed to penetrate through the housing, and the operation pipe may be provided as a control valve removing air from within the gas space 12 to form a vacuum in the gas space or supplying air thereto for the return operation of the membrane member.

In addition, the operation pipe 20 may be configured to be connected to a vacuum pump or an air blower (not shown).

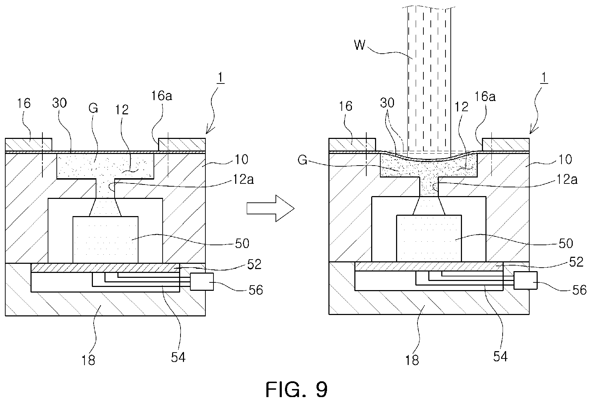

As illustrated in FIG. 9, the gas space 12 provided in the housing 10 may also be filled with compressible gas G to improve reaction sensitivity of the sensor. For example, when helium (He), nitrogen (N₂), or the like fills the gas space, in a case in which the column of liquid W collides with the membrane member 30, the reaction sensitivity of the pressure sensor 50 may be improved.

Therefore, even in a case in which an amount of flow of the column of liquid is relatively small, the performance of the cooling system (in a pouring state) may be precisely and quantitatively evaluated using the pressure sensor 50.

Meanwhile, when the compressible gas of FIG. 9 fills the gas space 12, sealing properties of the gas space 12 may be maintained by further including a sealing unit 80 in the sensor device according to a third exemplary embodiment of the present disclosure to be described below with reference to FIGS. 26 and 27.

For example, the sealing member may be disposed in a mounting groove 10a of the housing in the vicinity of the gas space, and the sealing member such as a packing or an O-ring may be mounted therein to prevent gas from leaking between the membrane member 30 and the housing.

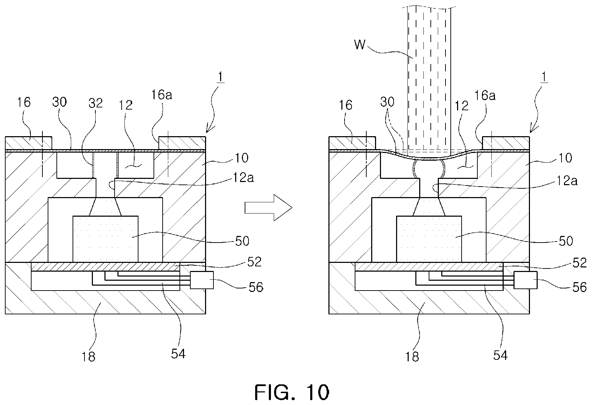

Subsequently, as illustrated in FIG. 10, a barrier member 32 is according to the invention integrated with the membrane member 30 on a lower portion thereof to be disposed in an inner portion of the gas space 12.

Thus, as illustrated in FIG. 10, when the column of liquid W collides with the membrane member 30, the membrane member may be distorted to be concave, and in this case, the barrier member 32 seals the passage 12a communicating with the pressure sensor 50 to implement the compression of fluid (air) in the inside thereof, and the compressed air allows for improvements in measurement sensitivity of the pressure sensor such that a relatively rapid response thereto and precise measurement may be obtained.

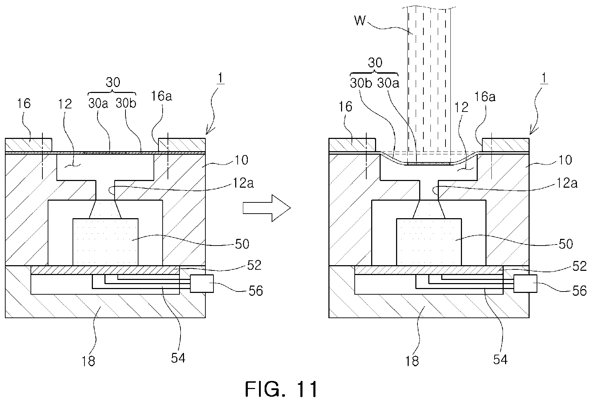

Then, as illustrated in FIG. 11, a membrane member 30 according to an exemplary embodiment of the present disclosure may have a dual structure having different strengths.

For example, when a central portion of the membrane member 30 colliding with the column of liquid W may be formed of a harder material than that of an outer circumferential portion 30b thereof integrated with an outer circumference of the membrane member and disposed between the housing 10 and the upper plate 16 or may have a thickness thicker than that of the outer circumferential portion 30b thereof, in a case in which the column of liquid collides with the membrane member, the hard central portion 30a may be downwardly deflected while having a flat area, and the outer circumferential portion 30b may be elastically and downwardly deflected, such that the downward deflection by the outer circumferential portion 30b at the time of the collision of the liquid column may be easily performed and compressibility of gas (air) in the gas space 12 may be increased to increase reaction sensitivity of the pressure sensor.

Thus, the precise measurement of pressure may be induced, and when the application of pressure is stopped, the membrane member may be rapidly returned to an initial position by the elastic outer circumferential portion 30.

In addition, in the case of FIG. 11, since the central portion 30a of the membrane member 30 with which the column of liquid collides is formed of a harder material than that of an outer circumferential portion thereof and has a thickness greater than that of the outer circumferential portion thereof, the abrasion of the central portion 30a may be relatively reduced. Since the outer circumferential portion 30b of the membrane member 30 has elasticity, the membrane member may provide a relatively large amount of displacement to increase the measurement sensitivity of the pressure sensor.

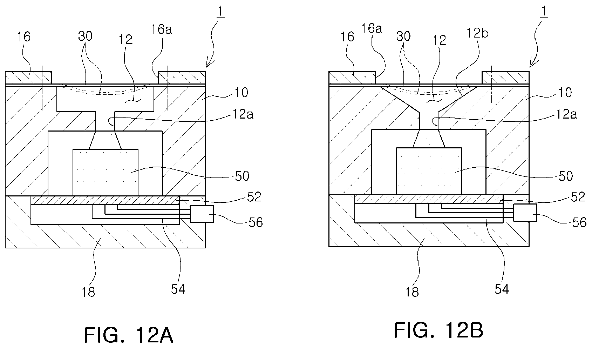

Then, as illustrated in FIGS. 12A and 12B, one or more volume reduction portions 12b integrated with the fluid space 12 of the housing 10 may be provided.

For example, the volume reduction portion 12b may be provided with the fluid space 12 of the housing 10 such that it is provided as an inclined surface to be tapered toward the pressure sensor.

In this case, when the column of liquid W collides with the membrane member 30, the membrane member may be distorted to be concave, and here, compressive force applied to interior air in the fluid space 12 may increase by the tapered volume-reduction portion 12b and the measurement sensitivity of the pressure sensor may be improved.

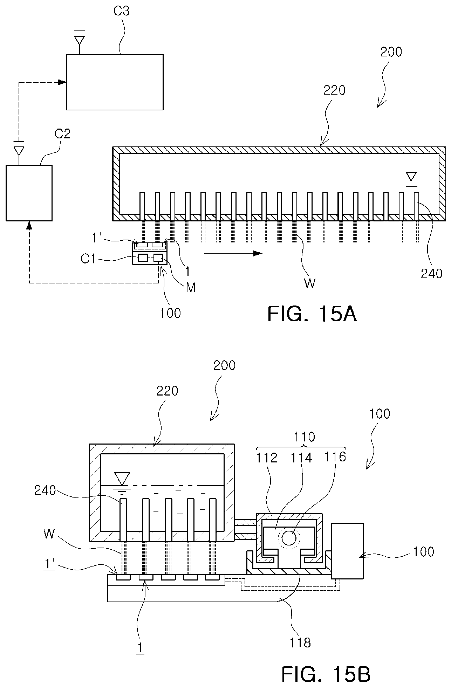

FIGS. 13 and 14 illustrate an assembled state and an exploded state of a sensor block 1' mounted in several types of sensor mounting units 110, 130 and 150 provided in an apparatus 100 for evaluating performance of a cooling system according to an exemplary embodiment of the present disclosure described with reference to FIGS. 15A to 19.

Meanwhile, the sensor block 1' of FIGS. 13 and 14 is applicable to a sensor device according to a second exemplary embodiment of the present disclosure to be described below with reference to FIGS. 20 to 25 and a sensor device according to a third exemplary embodiment of the present disclosure to be described below with reference to FIGS. 26 to 30.

For example, as illustrated in FIGS. 13 and 14, the housing 10 may be provided as a housing block 10' including a plurality of fluid spaces 12, and the housing block according the exemplary embodiment of the present disclosure may include a plurality of sensor spaces 14 communicating with the plurality of fluid spaces 12.

Therefore, the plurality of pressure sensors 50 may be embedded in the housing block, and further, the pressure sensors 50 may be disposed on a single substrate 52 to be set together. The substrate 52 may be mounted on a lower portion of the housing block, and at a lower portion thereof, a lower plate 18' having an elongately extended shape may be coupled to the housing block 10' .

In this case, an extended membrane member 30' may be closely attached to an upper part of the housing block 10' to seal the fluid spaces 12 receiving air, gas or an incompressible fluid, and thereon, an upper plate 16' may be disposed to surround and compress the membrane member 30' such that portions of the membrane member 30' are exposed to opening parts 16a of the upper plate 16' in exposed portions of the fluid spaces 12. For example, the membrane member may be coupled to the housing while bolts B are fastened to the housing blocks 10'.

In addition, the extended lower plate 18' may be fastened to the housing block 10' by the bolts B penetrating through the housing block from both ends of the lower plate 18' by using nuts N. In detail, when the housing block 10' is coupled to the lower plate 18', at least two O-rings OR may be inserted into both sides of the lower plate such that at least water does not infiltrate between the housing block and the lower plate.

In detail, since the sensor block 1' is used in the apparatus 100 for evaluating the performance of a cooling system such as the accelerated cooling unit 200, the housing block 10' and the upper and lower plates 16' and 18' should be water-tightened.

In addition, as illustrated in FIG. 14, the upper plate 16' is coupled to the housing block in an upper part of the sensor block, and the bolts B fixedly compressing the membrane members 30' may be used by interposing a packing material for watertight between the bolt and the membrane member, and a head portion thereof may have a structure capable of preventing water from being collecting therein.

Meanwhile, mounting patterns of the sensor devices 1 in the sensor block 1' of FIG. 13 may also be easily adjusted.

FIGS. 15A to 19 illustrate apparatuses 100 for evaluating the performance of the cooling system (in a dispensing state) according to exemplary embodiments of the present disclosure. For example, the apparatus 100 for evaluating the performance of a cooling system according to an exemplary embodiment of the present disclosure may be provided using one or more sensor blocks 1' in which the respective sensor devices 1 are aligned in columns appropriate therefor, for example, aligned to correspond to the alignment of the nozzles 240 of the upper header 220 as described above with reference to FIGS. 13 and 14.

For example, as illustrated in FIGS. 15A and 15B, the apparatus 100 for evaluating the performance of a cooling system according to an exemplary embodiment of the present disclosure may include a sensor mounting unit 110 in which one or more sensor blocks 1' including the plurality of unit-sensor devices 1 aligned therein are mounted.

The sensor block 1' may evaluate a dispensing state of the column of liquid through nozzles of the upper header while moving in a length direction of the upper header 220 in a state in which it transverses the upper header 220 to be extended in a width direction thereof as illustrated in FIGS. 15A and 15B, the evaluation in real time may be implemented through continuous quantitative measurement as illustrated in FIG. 7, control cooling may be implemented while being displayed, and the position of at least blocked nozzles may be grasped based on automation.

On the other hand, as illustrated in FIG. 15A, a first controlling unit C1 of the evaluation apparatus 100 collecting quantitative electrical signals collected in a sequence of paths of the pressure sensor 50, the substrate 52, the cable 54, and the connector 56 of the sensor block 1' may be provided in the sensor mounting unit 110 (FIG. 15B) in which one or more sensor blocks 1' are mounted. Here, a wireless transreceiver M may be connected and a main controlling unit C3 is wirelessly connected to a wireless processing control unit C2 having a wireless transceiving function, so as to form a single apparatus controlling unit such that a dispensing state of the column of liquid W from the upper header 220 may be precisely measured and evaluated based on the automation.

FIGS. 15B and 16 to 19 illustrate several types of sensor mounting unit in which one or more sensor blocks 1' are mounted to be moved from a lower portion of the upper header in the apparatus 100 for evaluating performance of a cooling system according to an exemplary embodiment of the present disclosure.

First, as illustrated in FIG. 15B, an LM-type sensor mounting unit 110 according to an exemplary embodiment of the present disclosure may include a movement block 114 mounted in an LM guide 112 connected to the upper header 220 and fastened to a screw bar 116 driven by a motor (not shown) . The movement block 114 may be connected to a sensor mounting block 118 in which one or more sensor blocks 1' are mounted, the sensor mounting block 118 may be extended to correspond to a width of the upper header, and the sensor mounting block may include one or more preset sensor blocks 1' mounted therein.

Thus, the movement block 114 may move from one side of the upper header in a length direction thereof, along with the LM guide 112, according to an operation of the screw bar 116, and the sensor devices 1 of the sensor blocks 1' may continuously measure pressure when the column of liquid collides with the membrane member, so as to evaluate the performance of nozzles of the cooling system.

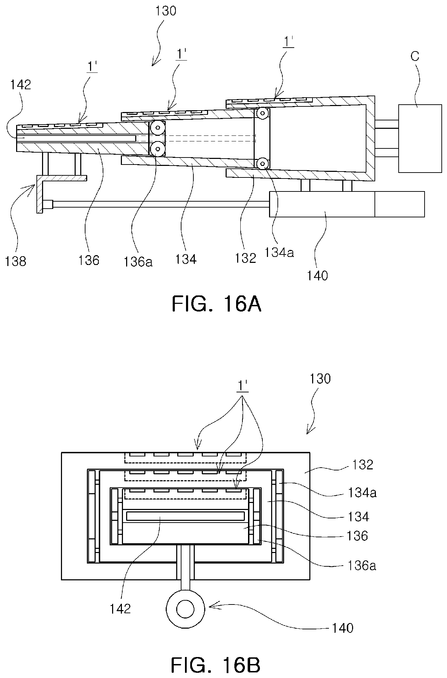

Then, as illustrated in FIGS. 16A and 16B, a deployable sensor mounting unit 130 is provided as a sensor mounting unit of the apparatus 100 for evaluating the performance of the cooling system according to the exemplary embodiment of the present disclosure.

For example, as illustrated in FIGS. 16A and 16B, one or more sensor blocks 1' are mounted, and multi-stage deployable sensor mounting blocks 132, 134 and 136 overlapping one another to be sequentially deployable are included, and a front-end block among the sensor mounting blocks is connected to a driving source 140, for example, a horizontal driving cylinder, via a connection part 138, such that the deploying thereof may be carried out along with the cooling header.

Here, the sensor mounting blocks of the deployable sensor mounting unit 130 may further include guide rollers 134a and 136a allowing the blocks to move easily for the deploying and overlapping thereof, and the blocks may be provided with a guide 142 located in central portions of the blocks.

When the driving source 140, for example, the horizontal driving cylinder, moves forwards or backwards, the front-end sensor mounting block 136 connected thereto enables subsequent sensor mounting blocks to be sequentially moved forward and backward, and thus, quantitative evaluation of the column of liquid through the sensor blocks 1' may be obtained according to the development and overlapping of the deployable sensor mounting blocks 132, 134 and 136 in which the sensor blocks 1' are aligned.

In addition, since the blocks have a form in which cross sections of front edges thereof are tapered, preceding blocks are not separated from the following sensor mounting blocks. Here, reference character 'C' in FIG. 16A generally refers to a controlling unit.

On the other hand, in the case of the deployable sensor mounting unit 130 of FIGS. 16A and 16B, since a plurality of sensor blocks 1' are mounted in the form of multi stages, the deployable sensor mounting unit 130 may be applied to a large capacity of cooling system, and the deployable sensor mounting unit 130 may be connected to a movement unit, for example, an LM type transfer unit or the like, not illustrated in the drawings, such that it may move by itself.

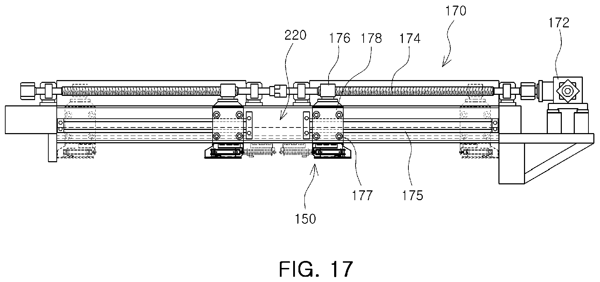

FIGS. 17 to 19 illustrate a different type of sensor mounting unit, for example, a masking-type sensor mounting unit 150, provided with the apparatus 100 for evaluating cooling system performance according to an exemplary embodiment of the present disclosure.

For example, as illustrated in FIGS. 17 to 19, the masking type sensor mounting unit 150, according to the exemplary embodiment of the present disclosure, may be connected to a publicly known masking unit 170 blocking the dispensing of a header in a cooling system, for example, the dispensing from both sides thereof, so as to correspond to a width of a thick plate.

However, a masking plate of the masking unit 17 is not illustrated in FIG. 17.

For example, the masking type sensor mounting unit 150 may include a plate-shaped base 152 provided with a multi-stage cylinder 152, 154 mounted horizontally and connected to a vertical movement plate 178 of the edge masking unit 170 to be able to move.

In this case, as illustrated in FIG. 17, the edge masking unit 170 may block the column of liquid W dispensed in a length direction of the upper header 220 to correspond to a width of a steel plate, and the vertically extended movement plate 178 may be connected to a movement block 176 fastened to a screw bar 175 elongately extended, provided to have a two-stage form and rotately driven by a motor 172 in an upper part of the upper header 220, and the movement plate 178 may be provided with rollers 177 moved along a rail 175 provided on the upper header.

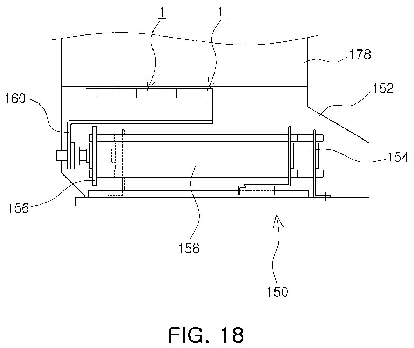

In addition, as illustrated in FIGS. 17 and 18, the base 152 of the masking type sensor mounting unit 150 may be connected to a lower end portion of the movement plate 178, and the base may be provided with two-stage cylinders and the sensor mounting plate.

For example, when a first cylinder 154 mounted on the base 152 as a pair is moved forward, a second cylinder 158 connected to a front-end load, as the movement plate, is moved forward, and the second cylinder 158 moved forward by a length corresponding to stroke of the first cylinder is re-moved forward. As a result, the sensor block 1' provided on an upper sensor block mounting plate 160 connected to the second cylinder may be deployed to a position in which the column of liquid collides with the membrane member 30' of the sensor device to evaluate performance.

In addition, in a case in which the evaluation of cooling system performance is not necessary, the first and second cylinders may be moved backwards to return to an original position from the base, and the movement plate 178 of the edge masking unit 170 may be moved to one end of the cooling header to stand by as illustrated in FIG. 17.

On the other hand, the two-stage first and second cylinders are applied to provide the sensor block with a sufficient forward stroke as an operating stroke of a single cylinder is restrictive.

Here, the base 152 of the masking type sensor mounting unit 150 may serve as a blocking plate blocking radiant heat from influencing the sensor block 1'.

Thus, the sensor blocks 1' may be moved or deployed in a width direction of a cooling header, for example, the upper header 220 through several types of sensor mounting units illustrated in FIGS. 15A to 19 (in a case in which the positions of sensor mounting units are only adjusted, the movement thereof in the width direction of the upper header is also sufficiently implementable), and a state in which the column of liquid is dispensed or injection water is injected through nozzles, for example, a performance state of the cooling system through the nozzle state, may be quantitatively and precisely evaluated in real time, based on automation.

FIGS. 20 to 25 illustrate several types of sensor device 1 according to a second exemplary embodiment of the present disclosure.

The sensor device 1 according to the second exemplary embodiment of the present disclosure may be provided in sensor mounting units 110, 130 and 150. For example, a sensor block 1' provided by allowing the sensor devices 1 to become blocking according to the second exemplary embodiment of the present disclosure may be mounted in the sensor mounting units, and a description of the sensor mounting unit 110 is the same as that of the sensor mounting unit of the foregoing exemplary embodiment with reference to FIGS. 15B to 19, and thus, a detailed description thereof will be omitted.

However, in the exemplary embodiment of the present disclosure described below, the fluid space 12 of the foregoing exemplary embodiment of the present disclosure will be described as a gas space 12 below.

Thus, the sensor device 1 according to the second exemplary embodiment of the present disclosure with reference to FIGS. 20 to 25 may be a sensor device generating an electrical signal of a level corresponding to an area or strength of collision (contact) of liquid or gas, in detail, a column of liquid dispensed from nozzles or injection water injected through nozzles under a high level of pressure. In further detail, controlling the temperature of gas (air) transferring pressure applied thereto to a sensor may be implemented such that a change in density of gas depending on a coolant or an ambient atmospheric temperature may be constant to prevent the occurrence of measurement errors. Therefore, the precision in measurement may be secured, and precise quantitative evaluation of a hot rolling material cooling system may be realized, based on the precise measurement.

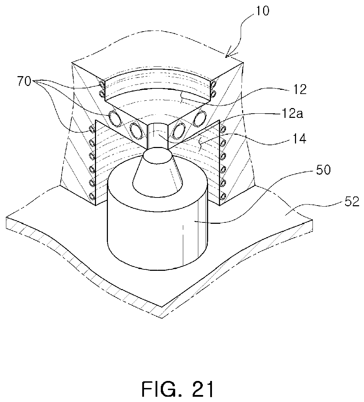

For example, as illustrated in FIGS. 20 and 21, similar to the sensor device 1 according to the first exemplary embodiment of the present disclosure, the sensor device 1 according to the second exemplary embodiment of the present disclosure may include a housing 10 including a gas space 12 receiving operating gas (air) such as air or gas having specific ingredients and a sensor space 14, a membrane member 30 sealing the gas space 12 and colliding with a pressure-applying material, and a sensor 50 mounted in the sensor space 14 and measuring pressure generated when the pressure-applying material collides with or contacts the membrane member.

Since a basic operation of the sensor device 1 according to the second exemplary embodiment of the present disclosure is the same as that of the sensor device described above according to the first exemplary embodiment of the present disclosure, a detailed description thereof will be omitted.

In further detail, the sensor device 1 according to the second exemplary embodiment of the present disclosure may include a temperature control unit provided in the housing 10 to encompass at least portions of the gas space 12 and the sensor space 14 and prevent the occurrence of measurement errors, as in the following detailed description.

For example, since the density of air (gas) in the gas space 12 is generally changed according to a change in an external atmospheric temperature or a coolant, even in a case in which the column of liquid in the same conditions collides with the membrane member 30 to generate the same deflection amount of the membrane member by the collisions therewith, the measurement error due to a change in density of air (gas) in the gas space 12 may occur.

Therefore, the temperature control unit provided in the sensor device according to the second exemplary embodiment of the present disclosure is provided in the housing 10 to encompass at least portions of the gas space 12 and the sensor space 14, to prevent the occurrence of measurement errors due to a change in temperature.

Subsequently, several types of temperature control unit provided in the sensor device 1 according to the second exemplary embodiment of the present disclosure will be described below.

First, as illustrated in FIGS. 20 and 21, the temperature control unit of the sensor device 1 according to the second exemplary embodiment of the present disclosure may be provided as a heat pipe 70 configured to be provided in the housing 10 while encompassing at least portions of the gas space 12 and the sensor space 14 provided in the housing 10, or a heating wire (not shown).

Here, in further detail, the heat pipe 70 or the heating wire of the temperature control unit may also encompass the entirety of the gas space 12 and the sensor space 14 and may be disposed adjacent to a gas space surface, a passage surface, and a sensor space surface.

In more detail, the heat pipe 70 (or the heating wire) of the present disclosure may be provided in the housing to have a multilayer structure or a multi-line structure.

In this case, since the heat pipe 70 or the heating wire (not shown) according to the exemplary embodiment of the present disclosure is aligned on a side and a lower portion of the gas space 12 and on an upper part and a side of the sensor space 14, the temperature of the interior air (gas) of the gas space or the sensor space having a relatively small space may be rapidly controlled.

Thus, the temperature of interior air of at least one or both of the gas space 12 and the sensor space 14 of the sensor device 1 according to the exemplary embodiment of the present disclosure may be maintained to be constant, a density of air in the gas space may be maintained to be constant without being affected by a change in an external temperature, and the sensor device may therefore prevent the occurrence of measurement errors.

On the other hand, as illustrated in FIGS. 20 and 21, the temperature control unit of the present disclosure, for example, the heat pipe 70, may have an appropriate standard (diameter), for example, adjusted to be appropriate for the inside spaces 12 and 14 of the housing 10. For example, heat pipes having a relatively large diameter may be installed to have a multi-row structure in the vicinity of a passage 12a, and heat pipes 70 having a relatively small diameter may be installed to have a multilayer structure in the vicinity of the gas space and the sensor space.

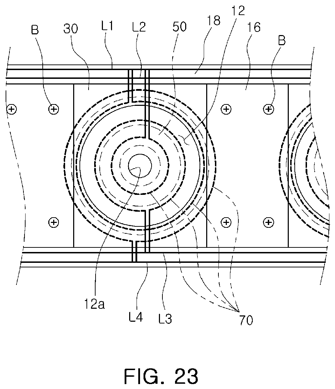

Here, as illustrated in FIG. 23, the heat pipes 70, the temperature control units, according to the exemplary embodiment of the present disclosure may be provided along a lower plate 18 (in a unit-length or extended form) of the sensor device 1, and may be connected to lines L1 to L4 for hot water, high temperature water, or steam, circulating through the heat pipes 70, a heat medium or the like, but the present disclosure is not limited thereto.

For example, the heat pipes 70 are connected, and in the case of the sensor block 1' as illustrated in FIG. 5, a lead-in line and a lead-out line of the heat pipe 70 may also be provided on both sides of the block.

The temperature control unit of the present disclosure, for example, the heat pipe 70 or the heating wire may be integratedly inserted into the housing 10, for example, in a case in which the housing is molded as a heat-resistant resin product, the heat pipe 70, a resin pipe, may be integratedly inserted in the housing 10, to thereby manufacture the temperature control unit.

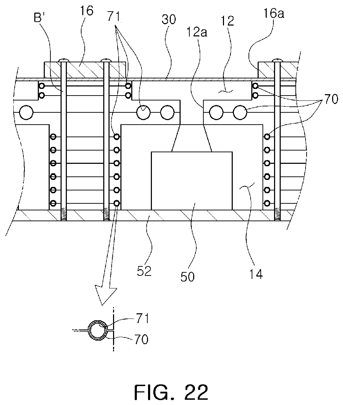

Alternatively, as illustrated in FIG. 22, in a case in which the housing 10 is formed using a metal such as stainless steel as incorrodible matter, respective units of plates may be stacked and aligned to have a multilayer structure so as to provide heat pipes, or the heat pipe 70 or a heating wire may be received in a heating wire receiving groove portion 71.

In this case, since the transfer of heat occurs regardless of whether the housing 10 is manufactured as a resin product or formed using stainless steel, the heat pipe 70 or the heating wire may be disposed adjacent to the gas space 12 or the sensor space 14.

The housing 10 having a multilayer structure, illustrated in FIG. 22, may be manufactured by compressing and coupling unit-housings to each other using a fastening bolt B' having an extended length, and the bolt may penetrate through a substrate 52 of a pressure sensor 50 to be fastened to the lower plate 18.

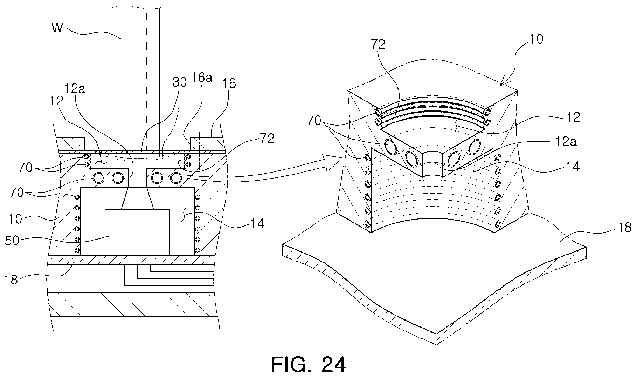

In addition, as illustrated in FIG. 24, a heat transfer expanding part may be further provided on at least a portion or the entirety of a surface of the housing corresponding to the gas space 12 and the sensor space 14 adjacent to the temperature control unit of the heat pipe 70 or the heating wire according to the exemplary embodiment of the present disclosure.

For example, the heat transfer expanding part of the present disclosure may have a riblet surface 72 integrated with a housing wall surface in the gas space 12 or the sensor space 14, for example, a cross-sectional serrated shape, such that temperature of the gas space or the sensor space may be effectively maintained at a constant level.

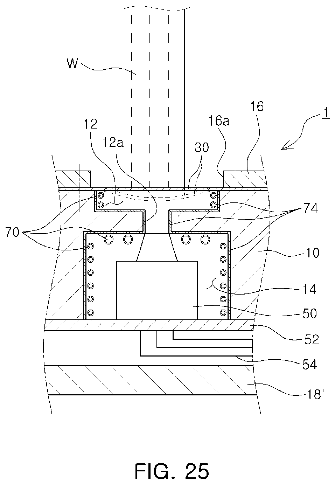

Further, as illustrated in FIG. 25, the temperature control unit according to the exemplary embodiment of the present disclosure may include a heat insulating material 74 provided on a housing surface in at least portions of the gas space 12 and the sensor space 14, and a heat pipe 70 or a heating wire, as the temperature control unit, provided in the gas space or the sensor space to be disposed inwardly of the heat insulating material.

For example, in the case of FIG. 25, since a heat insulating material 90 is provided to have a structure in which the heat pipe or the heating wire is disposed in the inside thereof, the controlling of an internal temperature in the gas space or the sensor space may be further precise or definitely performed.

Here, as illustrate din FIG. 25, in the case of using the heat insulating material 72, since the heat pipe 70 or the heating wire is disposed in the internal space, it may be further easy to maintain the temperature of the space. In further detail, the heat pipe 70 or heating wire may be disposed in a relatively more amount in the sensor space 14 wider than the gas space 12, and rather than being disposed in the gas space 12.

On the other hand, although schematically illustrated in FIG. 25, the heat pipe 70 or the heating wire may be appropriately provided in the gas space 12 and the sensor space 14 through a support aperture or the like.

FIGS. 26 to 27 illustrate a sensor device 1 according to a third exemplary embodiment of the present disclosure.

For example, the sensor device 1 according to the third exemplary embodiment of the present disclosure may have characteristics in that the space provided in the sensor device 1 according to the first and second exemplary embodiments of the present disclosure is the gas space 12 (air space).

The sensor device 1 according to the third exemplary embodiment of the present disclosure includes a housing 10 including a sensor space 14 in addition to a fluid space 12, a membrane member 30 provided on the housing 10 to seal the fluid space 12 and colliding with a pressure-applying material, for example, a column of liquid W, and a pressure sensor 50 mounted in the sensor space 14 of the housing to communicate with the fluid space 12 so as to measure pressure generated when the pressure-applying material such as the column of liquid or the like collides with or contacts the membrane member, as basic elements, as similar to the sensor device according to the first and second exemplary embodiments of the present disclosure.

Thus, in the case of the sensor device 1 according to the third exemplary embodiment of the present disclosure, when the pressure-applying material, for example, the column of liquid W, falls and collides with the membrane member 30 to generate pressure, the membrane member 30 may be deflected downwardly from a central portion thereof by the pressure applied thereto, and the volume change may occur in the fluid space 12, and the gas may transfer a differential pressure to the pressure sensor 50 such that the differential pressure is sensed by the pressure sensor.

For example, the collision force of the column of liquid W may determine whether the column of liquid is normally dispensed from the nozzles 240 of the upper cooling header 220 of the cooling system, which was described above according to the foregoing exemplary embodiments of the present disclosure.

Here, the sensor device 1 according to the third exemplary embodiment of the present disclosure may include a sealing unit 80 provided in the housing to be disposed in a boundary portion between the fluid space 12 and the membrane member 30, as illustrated in FIGS. 26 to 27.

For example, in the case of the sensor device 1 according to the third exemplary embodiment of the present disclosure, the sealing unit 80 and the fluid receiving unit 90 for preventing the leakage of gas or the like may be included.

In addition, the sensor device 1 according to the third exemplary embodiment of the present disclosure may have the same structure as the sensor device 1 according to the first and second exemplary embodiments of the present disclosure in terms of a basic structure.

For example, in the sensor device 1 according to the third exemplary embodiment of the present disclosure, the housing 10 may include a passage 12a between the fluid space 12 and the sensor space 14 through reduction in the volume to improve reaction sensitivity of the pressure sensor; a sensor unit, for example, the pressure sensor 50, may be mounted on the substrate 42 in the sensor space 14 in a lower portion of the passage; the substrate may be coupled to a lower portion of the housing; and a lower plate 18 may be coupled to a lower portion of the substrate.

Therefore, as illustrated in FIGS. 26 to 27, when the column of liquid W dispensed from the cooling header collides with the membrane member 30, the membrane member 30 may be deflected downwardly and pressure applied to the gas depending on a change in volume of the fluid space 12 may be transferred to the pressure sensor 50, such that the measurement may be performed by the sensor device.

In addition, although details are not illustrated in FIGS. 26 to 27, the sensor device 1 according to the third exemplary embodiment of the present disclosure may be mounted in the sensor mounting unit 110 as in the description of the sensor device according to the first exemplary embodiment of the present disclosure, such that the sensor device may be used in evaluating the performance of a cooling system (nozzles of the upper header).

Further, as illustrated in FIGS. 26 and 27, in the sensor device 1 according to the third exemplary embodiment of the present disclosure, a first sensor sealing portion 13 formed to be inclined may be further provided in the sensor space 14 of the housing 10 to be closely attached to a pressure applied portion 50a of the pressure sensor 50.

Thus, at the time of coupling of the sensor device 1, an inclined surface of the pressure applied portion 50a of the pressure sensor 50 may be closely attached to the first sensor sealing portion 13 such that the gas may be prevented from leaking toward a sensor unit, for example, the sensor space 14.

In addition, as illustrated in FIGS. 26 and 27, the sensor device 1 of the present disclosure may further include a second sensor sealing portion 15 provided in the sensor space 14 of the housing and disposed closely attached to a sensor body 50b of the sensor unit.

In further detail, a sealing member 15a, for example, a packing may be further interposed between the second sensor sealing portion 15 and the sensor body 50b.

Thus, in the case of the present disclosure, the external leakage of the interior fluid F of the fluid space 12, or the like, may be prevented through the sealing unit 80 provided in the membrane member (30) side, and may be prevented through the first and second sensor sealing portions 13 and 15 provided in the sensor space side.

In this case, as illustrated in FIGS. 26 and 27, the second sensor sealing portion 15 may be manufactured to be integrated with the housing in the case that the housing is formed using resin molding, and in the case that the housing is manufactured using metalwork in consideration of temperature or the like, the second sensor sealing portion 15 may have a structure in which a separate ring structure is coupled using welding (laser welding) or the like as illustrated by a dotted line of FIGS. 26 and 27.

In addition, as illustrated in FIGS. 26 and 27, in the case of the sensor device 1 according to the third exemplary embodiment of the present disclosure, the sealing unit 70 may be provided as an O-ring densely filling or inserted into at least one mounting portion 10a integrated with the housing 10.

### [Industrial Applicability]

As set forth above, according to exemplary embodiments of the present disclosure, a sensor structure may allow for the generation of a quantitative signal as well as a qualitative signal corresponding to pressure applied at the time of collision (contact) of liquid, gas, a column of liquid, injection water dispensed or injected through nozzles, or the like, and allow for the establishment of data.

Therefore, since the cooling system performance (in a dispensing or injection state of liquid) may be quantitatively and precisely evaluated, based on the sensor device according to the present disclosure, the overall evaluation of cooling capability as well as a nozzle state may be carried out, based on automation, even in a poor environment confined to a relatively small workplace.

## Claims

1. An apparatus (100) for evaluating performance of a cooling system (200) provided with a cooling header (220) including a nozzle (240), including a sensor device (1), the apparatus (100) comprising:
a sensor mounting unit (110, 130, 150) provided on a movement path on which a target material (S) to be cooled is moved; and
a sensor device (1) provided in the sensor mounting unit (110, 130, 150) to be aligned to correspond to the nozzles (240), wherein the sensor device (1) comprises:
a housing (10) including a gas space (12);
a membrane member (30) provided with the housing (10) and inducing a change in a volume of the gas space (12) at the time of a collision or contact of a pressure-applying material with the membrane member (30); and
a sensor unit (50) provided in the housing (10) to communicate with the gas space (12);
**characterized in that** it further comprises
a barrier member (32) provided on a lower portion of the membrane member (30) to be disposed in an inner portion of the gas space (12) to allow a fluid to be concentrated on the sensor unit (50), wherein the barrier member (32) is integrated with the membrane member (30) on a lower portion thereof; and
wherein the barrier member (32) seals a passage (12a) communicating with the pressure sensor (50) to implement the compression of fluid in the inside thereof.

2. The apparatus (100) of claim 1, wherein the sensor unit (50) is provided as a pressure sensor, and the gas space (12) is filled with gas or air, or is compositely filled with gas or air, provided to allow for pressure measurement by the pressure sensor (50), in response to the change in volume of the gas space.

3. The apparatus (100) of claim 1, further comprising:
a sensor space (14) provided in the housing (10) and including a sensor unit (50) embedded in the sensor space (14); and
an upper plate (16) and a lower plate (18) provided with an upper part and a lower part of the housing (10) to be coupled to the membrane member (30) and a sensor unit side.

4. The apparatus (100) of claim 1, further comprising a passage (12a) between the gas space (12) and the sensor unit (50) in the housing (10) through reduction in the volume to improve sensor reaction sensitivity.

5. The apparatus (100) of claim 1, further comprising an operation pipe (20) communicating with the gas space (12) in the housing (10) and controlling an atmosphere in the gas space (12) to improve the reaction sensitivity of the sensor unit (50).

6. The apparatus (100) of claim 2, further comprising a temperature control unit provided in the housing (10) to encompass at least a portion of the gas space (12), the gas space (12) being filled with gas or air.

7. The apparatus (100) of claim 6, wherein the temperature control unit encompasses at least a portion of the sensor space (14) and is provided as a heat pipe (70) or a heating wire in the housing (10) to control temperature of gas or air in the gas space (12).

8. The apparatus (100) of claim 6, further comprising a heat transfer expanding part provided in at least a portion of a surface of the housing (10) corresponding to the gas space (12) and the sensor space (14) adjacent to the temperature control unit.

9. The apparatus (100) of claim 7, wherein the temperature control unit further comprises a heat insulating material (74) provided on a housing surface in at least portions of the gas space (12) and the sensor space (14), and the heat pipe (70) or the heating wire are provided in the gas space (12) and the sensor space (14) to be disposed inwardly of the heat insulating material (74).

10. The apparatus (100) of claim 2, further comprising a sealing unit (80provided in the housing (10) to be disposed in a boundary portion between the gas space (12) and the membrane member (30).

11. The apparatus (100) of claim 10, wherein the sealing unit (80) is provided as an O-ring disposed in a mounting portion (10a) formed in the housing (10).

12. The apparatus (100) of claim 1, wherein the housing (10) provided in the sensor device (1) is provided as a housing block (10') including a plurality of gas spaces (12), and the housing block (10') comprises a plurality of pressure sensors (50) embedded in the housing block (10'), and in the housing block (10'), one or more sensor blocks (1') provided by an elongately extended membrane member (30') and upper and lower plates (16', 18') coupled to one another are mounted in the sensor mounting unit (110, 130, 150).

13. The apparatus (100) of claim 1, wherein the sensor mounting unit (110, 130, 150) is provided as one of an LM-type sensor mounting unit (110), a deployable sensor mounting unit (130), and a masking-type sensor mounting unit (150).

## Patentansprüche

1. Vorrichtung (100) zur Beurteilung der Leistung eines Kühlsystems (200), das mit einem Kühlsammelrohr (220) mit einer Düse (240) versehen ist, eine Sensorvorrichtung (1) aufweisend, wobei die Vorrichtung (100) umfasst:
eine Sensormontageeinheit (110, 130, 150), die auf einem Bewegungspfad vorgesehen ist, auf dem ein zu kühlendes Zielmaterial (S) bewegt wird; und
eine Sensorvorrichtung (1), die in der Sensormontageeinheit (110, 130, 150) mit den Düsen (240) entsprechend ausgerichtet vorgesehen ist, wobei die Sensorvorrichtung (1) umfasst:
ein Gehäuse (10), das einen Gasraum (12) enthält;
ein Membranelement (30), das mit dem Gehäuse (10) vorgesehen ist und eine Änderung eines Volumens des Gasraums (12) bei einer Kollision oder einem Kontakt eines druckbeaufschlagenden Materials mit der Membran (30) herbeiführt; und
eine Sensoreinheit (50), die in dem Gehäuse (10) vorgesehen ist, um mit dem Gasraum (12) zu kommunizieren;
**dadurch gekennzeichnet, dass** sie darüber hinaus umfasst
ein Absperrungsteil (32), das an einem unteren Abschnitt des Membranelements (30) in einem Innenabschnitt des Gasraums (12) angeordnet vorgesehen ist, um ein an der Sensoreinheit (50) zu konzentrierendes Fluid einzulassen, wobei das Absperrungsteil (32) in das Membranelement (30) an einem unteren Abschnitt von diesem integriert ist; und
wobei das Absperrungsteil (32) einen mit dem Drucksensor (50) in Verbindung stehenden Durchgang (12a) verschließt, um die Fluidkompression in dessen Innerem zu implementieren.

2. Vorrichtung (100) nach Anspruch 1, wobei die Sensoreinheit (50) als Drucksensor vorgesehen und der Gasraum (12) mit Gas oder Luft gefüllt oder auf Verbundart mit Gas oder Luft gefüllt ist, das bzw. die vorgesehen ist, um eine Druckmessung durch den Drucksensor (50) im Ansprechen auf die Änderung bei dem Volumen des Gasraums zu ermöglichen.

3. Vorrichtung (100) nach Anspruch 1, darüber hinaus umfassend:
einen Sensorraum (14), der in dem Gehäuse (10) vorgesehen ist und eine Sensoreinheit (50) enthält, die in den Sensorraum (14) eingebettet ist; und
eine obere Platte (16) und eine untere Platte (18), die mit einem Oberteil und einem Unterteil des Gehäuses (10) bereitgestellt sind, um mit dem Membranelement (30) und einer Sensoreinheitsseite verbunden zu werden.

4. Vorrichtung (100) nach Anspruch 1, darüber hinaus einen Durchgang (12a) zwischen dem Gasraum (12) und der Sensoreinheit (50) in dem Gehäuse (10) durch eine Reduktion im Volumen umfassend, um die Sensorreaktionsempfindlichkeit zu verbessern.

5. Vorrichtung (100) nach Anspruch 1, darüber hinaus ein Betriebsrohr (20) umfassend, das mit dem Gasraum (12) in dem Gehäuse (10) in Verbindung steht und eine Atmosphäre in dem Gasraum (12) regelt, um die Reaktionsempfindlichkeit der Sensoreinheit (50) zu verbessern.

6. Vorrichtung (100) nach Anspruch 2, darüber hinaus eine Temperatursteuerungseinheit umfassend, die zumindest einen Teil des Gasraums (12) umgebend in dem Gehäuse (10) vorgesehen ist, wobei der Gasraum (12) mit Gas oder Luft gefüllt ist.

7. Vorrichtung (100) nach Anspruch 6, wobei die Temperatursteuerungseinheit zumindest einen Teil des Gasraums (12) umgibt und als Wärmerohr (70) oder Heizdraht in dem Gehäuse (10) vorgesehen ist, um die Temperatur von Gas oder Luft in dem Gasraum (12) zu regeln.

8. Vorrichtung (100) nach Anspruch 6, darüber hinaus ein Wärmeübertragungsexpansionsteil umfassend, das zumindest in einem Abschnitt einer Oberfläche des Gehäuses (10), der dem Gasraum (12) und dem Sensorraum (14) entspricht, angrenzend an die Temperatursteuerungseinheit vorgesehen ist.

9. Vorrichtung (100) nach Anspruch 7, wobei die Temperatursteuerungseinheit darüber hinaus ein wärmedämmendes Material (74) umfasst, das an einer Gehäuseoberfläche in zumindest Abschnitten des Gasraums (12) und des Sensorraums (14) vorgesehen ist, und das Wärmerohr (70) oder der Heizdraht in dem Gasraum (12) und dem Sensorraum (14) innenliegend vom wärmedämmenden Material (74) angeordnet sind.

10. Vorrichtung (100) nach Anspruch 2, darüber hinaus eine Dichtungseinheit (80) umfassend, die in dem Gehäuse (10) bereitgestellt ist, um in einem Grenzabschnitt zwischen dem Gasraum (12) und dem Membranelement (30) angeordnet zu werden.

11. Vorrichtung (100) nach Anspruch 10, wobei die Dichtungseinheit (80) als O-Ring vorgesehen ist, der in einem in dem Gehäuse (10) ausgebildeten Montageabschnitt (10a) angeordnet ist.

12. Vorrichtung (100) nach Anspruch 1, wobei das in der Sensorvorrichtung (1) vorgesehene Gehäuse (10) als Gehäuseblock (10') vorgesehen ist, der mehrere Gasräume (12) enthält, und der Gehäuseblock (10') mehrere Drucksensoren (50) umfasst, die in den Gehäuseblock (10') eingebettet sind, und in dem Gehäuseblock (10') ein Sensorblock oder mehrere Sensorblöcke (1'), der bzw. die durch ein langgestrecktes Membranelement (30') und eine obere und untere Platte (16', 18') vorgesehen ist bzw. sind, die miteinander verbunden sind, in der Sensormontageeinheit (110, 130, 150) montiert sind.

13. Vorrichtung (100) nach Anspruch 1, wobei die Sensormontageeinheit (110, 130, 150) als eine Einheit aus einer Sensormontageeinheit (110) des LM-Typs, einer einsetzbaren Sensormontageeinheit (130) und einer Sensormontageeinheit (150) des Maskierungstyps vorgesehen ist

## Revendications

1. Appareil (100) d'évaluation de la performance d'un système de refroidissement (200) pourvu d'un collecteur de refroidissement (220) incluant une tuyère (240), incluant un dispositif de capteur (1), l'appareil (100) comprenant :
une unité de montage de capteur (110, 130, 150) prévue sur un trajet de mouvement sur lequel un matériau cible (S) devant être refroidi est déplacé ; et
un dispositif de capteur (1) prévu dans l'unité de montage de capteur (110, 130, 150) pour être aligné pour correspondre aux tuyères (240), sachant que le dispositif de capteur (1) comprend :
un logement (10) incluant un espace de gaz (12) ;
un élément membrane (30) prévu avec le logement (10) et induisant un changement dans un volume de l'espace de gaz (12) au moment d'une collision ou d'un contact d'un matériau appliquant une pression avec l'élément membrane (30) ; et
une unité de capteur (50) prévue dans le logement (10) pour communiquer avec l'espace de gaz (12) ;
**caractérisé en ce qu'**il comprend en outre
un élément barrière (32) prévu sur une partie inférieure de l'élément membrane (30) pour être disposé dans une partie intérieure de l'espace de gaz (12) pour permettre à un fluide d'être concentré sur l'unité de capteur (50), sachant que l'élément barrière (32) est intégré à l'élément membrane (30) sur une partie inférieure de celui-ci ; et
sachant que l'élément barrière (32) étanchéifie un passage (12a) communiquant avec le capteur de pression (50) pour implémenter la compression de fluide dans l'intérieur de celui-ci.

2. L'appareil (100) de la revendication 1, sachant que l'unité de capteur (50) est prévue en tant que capteur de pression, et l'espace de gaz (12) est rempli de gaz ou d'air, ou est rempli de manière composite de gaz ou d'air, qui est prévu ou prévue pour permettre une mesure de pression par le capteur de pression (50), en réponse au changement de volume de l'espace de gaz.

3. L'appareil (100) de la revendication 1, comprenant en outre :
un espace de capteur (14) prévu dans le logement (10) et incluant une unité de capteur (50) logée dans l'espace de capteur (14) ; et
une plaque supérieure (16) et une plaque inférieure (18) pourvues d'une partie supérieure et d'une partie inférieure du logement (10) pour être couplées à l'élément membrane (30) et un côté d'unité de capteur.

4. L'appareil (100) de la revendication 1, comprenant en outre un passage (12a) entre l'espace de gaz (12) et l'unité de capteur (50) dans le logement (10) par réduction dans le volume pour améliorer une sensibilité de réaction de capteur.

5. L'appareil (100) de la revendication 1, comprenant en outre une conduite de fonctionnement (20) communiquant avec l'espace de gaz (12) dans le logement (10) et commandant une atmosphère dans l'espace de gaz (12) pour améliorer la sensibilité de réaction de l'unité de capteur (50).

6. L'appareil (100) de la revendication 2, comprenant en outre une unité de commande de température prévue dans le logement (10) pour entourer au moins une partie de l'espace de gaz (12), l'espace de gaz (12) étant rempli de gaz ou d'air.

7. L'appareil (100) de la revendication 6, sachant que l'unité de commande de température entoure au moins une partie de l'espace de capteur (14) et est prévue comme conduite de chaleur (70) ou comme fil chauffant dans le logement (10) pour commander une température de gaz ou d'air dans l'espace de gaz (12).

8. L'appareil (100) de la revendication 6, comprenant en outre une partie de dilatation à transfert de chaleur prévue dans au moins une partie d'une surface du logement (10) correspondant à l'espace de gaz (12) et à l'espace de capteur (14) de manière adjacente à l'unité de commande de température.

9. L'appareil (100) de la revendication 7, sachant que l'unité de commande de température comprend en outre un matériau d'isolation thermique (74) prévu sur une surface de logement dans au moins des parties de l'espace de gaz (12) et de l'espace de capteur (14), et la conduite de chaleur (70) ou le fil chauffant sont prévus dans l'espace de gaz (12) et l'espace de capteur (14) pour être disposés vers l'intérieur du matériau d'isolation thermique (74).

10. L'appareil (100) de la revendication 2, comprenant en outre une unité d'étanchéité (80) prévue dans le logement (10) pour être disposée dans une partie limitrophe entre l'espace de gaz (12) et l'élément membrane (30).

11. L'appareil (100) de la revendication 10, sachant que l'unité d'étanchéité (80) est prévue comme joint torique disposé dans une partie de montage (10a) formé dans le logement (10).

12. L'appareil (100) de la revendication 1, sachant que le logement (10) prévu dans le dispositif de capteur (1) est prévu comme bloc de logement (10') incluant une pluralité d'espaces de gaz (12), et le bloc de logement (10') comprend une pluralité de capteurs de pression (50) logés dans le bloc de logement (10'), et dans le bloc de logement (10'), un ou plusieurs blocs de capteur (1') prévus par un élément membrane (30') étendu de manière allongée et des plaques supérieure et inférieure (16', 18') couplées l'une à l'autre sont montés dans l'unité de montage de capteur (110, 130, 150).

13. L'appareil (100) de la revendication 1, sachant que l'unité de montage de capteur (110, 130, 150) est prévue comme l'une d'une unité de montage de capteur de type LM (110), d'une unité de montage de capteur (130) déployable, et d'une unité de montage de capteur (150) de type masquage.
